# EUROPEAN PATENT APPLICATION

(11) **EP 4 850 930 A1**
(43) Date of publication of application: **09.12.2026**
(21) Application number: 24921898.3
(22) Date of filing: 20.12.2024
(51) Int. Cl.: B60C 9/00, B60C 1/00, B60C 9/04, C08K 3/04, C08L 21/00

(54) **PNEUMATIC TIRE**

(30) Priority: 02.02.2024 JP 2024014945
(71) Applicant: The Yokohama Rubber Co., Ltd., Hiratsuka-shi, Kanagawa 254-8601 (JP)
(72) Inventor: ZHANG, Di, Hiratsuka-shi, Kanagawa 254-8601 (JP); SUZUKI, Sakiko, Hiratsuka-shi, Kanagawa 254-8601 (JP)
(74) Representative: Grünecker Patent- und Rechtsanwälte PartG mbB
(86) International application number: PCT/JP2024/045182
(87) International publication number: WO 2025/164145

(57) **Abstract**

Provided is a pneumatic tire that can satisfactorily maintain high-speed durability even when recycled PET resin is used for a carcass cord. In a pneumatic tire including a carcass layer (4), an organic fiber cord made of PET resin having a melting point of 240°C to 260°C is used as a carcass cord constituting the carcass layer (4). The PET resin contains recycled PET resin.

## Description

### Technical Field

The present invention relates to a pneumatic tire including a carcass layer formed of organic fiber cords.

### Background Art

From the viewpoint of resource conservation and environmental protection, many attempts to reuse collected used PET bottles as recycled PET resin for clothing applications and industrial material applications have recently been proposed. In the field of tires, there is also a need to use such renewable raw materials. Organic fiber cords (PET cords) are known to be used as reinforcing cords constituting carcass layers and belt reinforcing layers among constituent members of tires, and the use of the above recycled PET resin as a material for such cords has been studied (see, for example, Patent Documents 1 and 2). Unfortunately, recycled PET resin contains a small amount of impurities, such as isophthalic acid (IPA) and diethylene glycol (DEG), making it difficult to obtain desired tire performance (for example, Patent Documents 1 and 2 use a fiber cord made of recycled PET resin and a fiber cord made of another resin and used as a so-called hybrid cord twisted together to obtain desired performance). Accordingly, there is a demand for sufficiently ensuring desired tire performance (for example, durability) even when recycled PET resin is used.

### Citation List

### Patent Literature

Patent Document 1: JP 2022-533443
Patent Document 2: JP 2018-130974

### Summary of Invention

### Technical Problem

It is an object of the present invention to provide a pneumatic tire that includes a carcass layer formed of an organic fiber cord and can satisfactorily maintain high-speed durability even when recycled PET resin is used for a carcass cord.

### Solution to Problem

A pneumatic tire of an embodiment of the present invention to achieve the object described above includes: a tread portion extending in a tire circumferential direction and having an annular shape; a pair of sidewall portions disposed on both sides of the tread portion; a pair of bead portions each disposed on an inner side of the sidewall portions in a tire radial direction; and at least one carcass layer mounted between the pair of bead portions. In the pneumatic tire, a carcass cord constituting the carcass layer is an organic fiber cord made of PET resin having a melting point of 240°C to 260°C, and the PET resin contains recycled PET resin.

### Advantageous Effects of Invention

In an embodiment of the present invention, an organic fiber cord containing recycled PET resin is used as the carcass cord constituting the carcass layer as described above, and PET resin (PET resin containing recycled PET resin) constituting the organic fiber cord has the melting point of 240°C to 260°C, thereby satisfactorily maintaining high-speed durability even when recycled PET resin is used. Specifically, the inventors of the present invention have found that as the content of impurities (components such as IPA or DEG contained in used PET bottles prior to decomposition) in recycled PET resin, the melting point of recycled PET resin (the melting point of PET resin containing recycled PET resin, which is a mixture thereof) tends to decrease and that the use of such recycled PET resin (PET resin containing recycled PET resin) for a carcass cord results in reduced durability. The inventors have made it possible to ensure durability when using recycled PET resin by optimizing the melting point of recycled PET resin containing recycled PET resin, which is a mixture thereof, (setting it within the above-described range).

In an embodiment of the present invention, the melting point of PET resin is a melting point of a mixture of recycled PET resin and other types of (petroleum-derived) PET resin and refers to a temperature of a melting peak of a DSC curve obtained by measuring, using a differential scanning calorimeter (DSC), a temperature range of 25°C to 300°C under a condition of a 10°C/min temperature rising rate. When the proportion of recycled PET resin in the PET resin is 100%, the melting point refers to the melting point of PET resin of recycled PET resin alone measured as described above.

In an embodiment of the present invention, it is preferable that coating rubber covering the carcass cord is formed of a rubber composition including 30 to 80 parts by mass of carbon black having a nitrogen adsorption specific surface area N₂SA 25 m²/g to 50 m²/g per 100 parts by mass of rubber component. Using such a coating rubber enables appropriate reinforcement of the carcass cord containing recycled PET resin, which is advantageous for satisfactorily maintaining high-speed durability. Heat generation can be suppressed by the coating rubber, and rolling resistance can also be reduced. It is assumed that the nitrogen adsorption specific surface area N₂SA of carbon black is measured in accordance with JIS K6217-2.

In an embodiment of the present invention, tensile strength of the carcass cord containing recycled PET resin is preferably 6.0 cN/dtex or more. Possession of such tensile strength makes it possible to obtain performance (durability) comparable to that in the case of using a conventional petroleum-derived PET cord. The tensile strength is a value measured based on JIS L1017.

In an embodiment of the present invention, the number of twists of the carcass cord preferably ranges from 25 twists/100 mm to 50 twists/100 mm. Setting the number of twists as described above provides satisfactory spring property and rigidity of the cord even for a carcass cord containing recycled PET resin, which is advantageous for satisfactorily maintaining high-speed durability and load durability.

In an embodiment of the present invention, from the viewpoint of increasing the proportion of renewable raw materials in the tire, the proportion of recycled PET resin in PET resin preferably ranges from 20% to 100%. The "proportion" used here refers to the ratio of the weight of recycled PET resin to the weight of PET resin containing recycled PET resin, which is a mixture thereof.

### Brief Description of Drawings

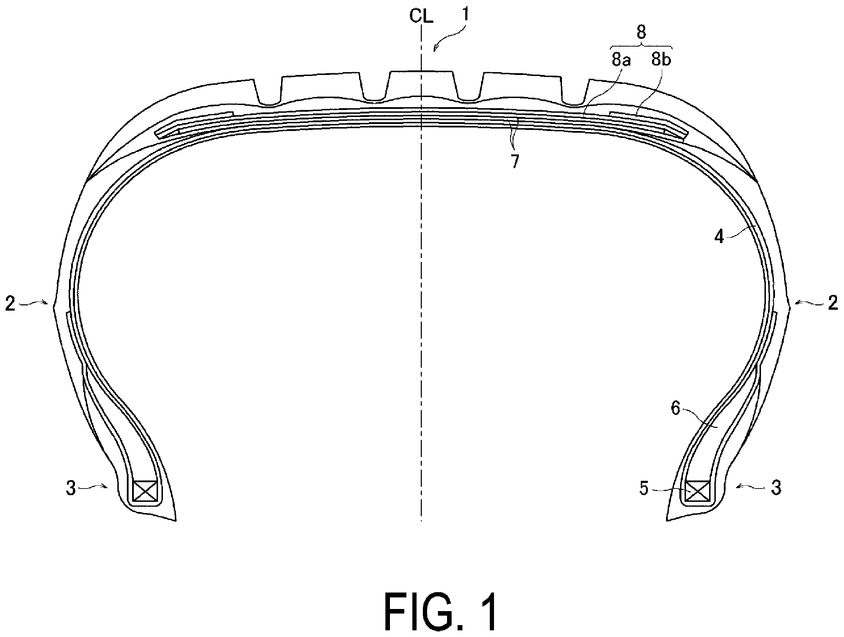

FIG. 1 is a meridian cross-sectional view illustrating a pneumatic tire according to an embodiment of the present invention.

### Description of Embodiments

Configurations of embodiments of the present invention will be described in detail below with reference to the accompanying drawings.

As illustrated in FIG. 1, a pneumatic tire of the present invention includes a tread portion 1, a pair of sidewall portions 2 disposed on both sides of the tread portion 1, and a pair of bead portions 3 disposed on the inner side of the sidewall portion 2 in the tire radial direction. The reference sign "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction and form an annular shape. This forms a toroidal basic structure of the pneumatic tire. Hereinafter, although the description using FIG. 1 is basically based on an illustrated meridian cross-sectional shape, all tire components extend in the tire circumferential direction and form an annular shape.

A carcass layer 4 including a plurality of reinforcing cords (hereinafter, referred to as carcass cords) extending in the tire radial direction is mounted between the pair of bead portions 3 on the right and left. A bead core 5 is embedded in each of the bead portions, and a bead filler 6 having an approximately triangular cross-sectional shape is disposed on an outer circumference of the bead core 5. The carcass layer 4 is folded back around the bead core 5 from an inner side to an outer side in a tire width direction. Accordingly, the bead core 5 and the bead filler 6 are wrapped by a body portion (a portion extending from the tread portion 1 through each of the sidewall portions 2 to each of the bead portions 3) and a folded back portion (a portion folded back around the bead core 5 of each bead portion 3 and extending toward each sidewall portion 2 side) of the carcass layer 4.

A plurality of belt layers 7 (in the illustrated example, two layers) are embedded on an outer circumferential side of the carcass layer 4 in the tread portion 1. Each of the belt layers 7 includes a plurality of reinforcing cords (hereinafter, referred to as belt cords) inclined with respect to the tire circumferential direction, and the belt cords are disposed so as to intersect with one another between the layers. In the belt layers 7, an inclination angle of the belt cord with respect to the tire circumferential direction is set within a range, for example, from 10° to 40°. For example, steel cords are preferably used as the belt cords constituting the belt layer 7.

Further, to improve high-speed durability, a belt cover layer 8 is provided on an outer circumferential side of the belt layers 7. The belt cover layer 8 includes a reinforcing cord (hereinafter, referred to as a cover cord) oriented in the tire circumferential direction. In the belt cover layer 8, the angle of the cover cords with respect to the tire circumferential direction is set to, for example, 0° to 5°. As the belt cover layer 8, a full cover layer 8a that covers an entire region of the belt layers 7 in the width direction, and a pair of edge cover layers 8b that locally cover both end portions of the belt layers 7 in the tire width direction can be provided individually or in combination (in the illustrated example, both of the full cover layer 8a and the edge cover layers 8b are provided). The belt cover layer 8 is, for example, preferably configured such that a strip material made of at least a cover cord covered with coating rubber is wound spirally in the tire circumferential direction, and desirably has, in particular, a jointless structure.

The present invention mainly relates to a cord (carcass cord) constituting the carcass layer 4, and the basic structure of the tire is not limited to that described above.

In an embodiment of the present invention, the carcass cord constituting the carcass layer 4 is formed of an organic fiber cord with filament bundles thereof twisted together. The organic fiber cord is made of a PET resin (polyethylene terephthalate resin) having a melting point of 240°C to 260°C, preferably 248°C to 260°C, and the PET resin essentially contains recycled PET resin. Recycled PET resin refers to PET resin (polyethylene terephthalate resin) obtained by decomposing recovered used PET bottle by mechanical recycling (physical recycling method) or chemical recycling (chemical recycling method). Mechanical recycling (physical recycling method) is a method of recycling and regenerating used PET bottles as PET resin by pulverizing and washing the used PET bottles and subsequently subjecting them to melting, reducing pressure, and filtering at a high temperature. Chemical recycling (chemical regeneration method) refers to a method that pulverizes, washes, and subsequently depolymerizes used PET bottles to obtain a decomposed and purified raw material or intermediate material of PET resin, which is then repolymerized into new PET resin. Regenerated PET resin obtained by chemical recycling among these methods has a lower content of impurities and a melting point close to that of petroleum-derived PET resin and can be suitably used for the present invention.

When an organic fiber cord containing recycled PET resin as described above is used, the melting point of PET resin (the melting point of PET resin (mixture) containing recycled PET resin) is set in the range of 240°C to 260°C, thereby satisfactorily maintaining high-speed durability even when recycled PET resin is used. If the melting point of PET resin is less than 240°C, the PET cord may melt due to rise of temperature during high-speed running, which prevents satisfactorily maintaining high-speed durability. Since the melting point of PET resin alone not containing recycled PET resin is 260°C, the melting point of PET resin mixture of an embodiment of the present invention containing recycled PET resin that, which tends to have a lower melting point, does not exceed 260°C. The melting point of PET resin (mixture) varies depending on the content of recycled PET resin and the purity of recycled PET resin. In other words, there is a tendency that the higher the content of recycled PET resin is, the lower the melting point of PET resin (mixture) of the present invention becomes. The larger the amount of impurities (components such as IPA and DEG) contained in recycled PET resin is, the lower the melting point becomes, for a same content of recycled PET resin.

In an embodiment of the present invention, from the viewpoint of increasing the proportion of renewable raw materials in tires, the proportion of recycled PET resin in PET resin preferably ranges from 20% to 100%, more preferably from 50% to 100%, still more preferably from 70% to 100%. If the proportion of recycled PET resin in the PET resin is less than 20%, the influence of recycled PET resin on durability is reduced, and the durability is maintained even if the above embodiment of the present invention is not applied.

The carcass cords of an embodiment of the present invention made of PET resin containing recycled PET resin as described above preferably have a tensile strength of 6.0 cN/dtex or more, more preferably 6.2 cN/dtex to 7.5 cN/dtex. Possession of tensile strength as described above is advantageous for obtaining performance (durability) comparable to that when a conventional petroleum-derived PET cord is used. When the tensile strength of the carcass cord is less than 6.0 cN/dtex, high-speed durability cannot be satisfactorily maintained. The tensile strength of the carcass cord can be appropriately set according to the degree of polymerization of PET resin as a raw material and the spinning conditions of the cord.

The number of twists of the carcass cord preferably ranges from 25 twists/100 mm to 50 twists/100 mm, more preferably from 30 twists/100 mm to 45 twists/100 mm. Setting the number of twists as described above provides satisfactory spring property and rigidity of the cord even for a carcass cord containing recycled PET resin, which is advantageous for satisfactorily maintaining high-speed durability and load durability. If the number of twists of the carcass cord is less than 25 twists/100 mm, the spring property may be reduced, leading to deterioration of load durability. If the number of twists of the carcass cord exceeds 50 twists/100 mm, the rigidity of the cord may be reduced, leading to a decrease in high-speed durability.

In the carcass layer 4, the above carcass cord is covered with coating rubber. On this occasion, the rubber composition constituting the coating rubber may preferably contain carbon black as a filler. Specifically, the nitrogen adsorption specific surface area N₂SA of carbon black blended in the rubber composition constituting the coating rubber is preferably 25 m²/g to 50 m²/g, more preferably 30 m²/g to 45 m²/g. The blended amount of carbon black is preferably 30 parts by mass to 80 parts by mass, more preferably 50 parts by mass to 70 parts by mass per 100 parts by mass of the rubber component serving as the main component of the rubber composition constituting the coating rubber. Using such a coating rubber enables appropriate reinforcement of the carcass cord containing recycled PET resin, which is advantageous for satisfactorily maintaining high-speed durability. Heat generation can be suppressed by the coating rubber, and rolling resistance can also be reduced.

If the nitrogen adsorption specific surface area N₂SA of carbon black blended in the coating rubber is less than 25 m²/g, reinforcing effect of the coating rubber is not sufficiently obtained, resulting in a limited effect of maintaining durability. If the nitrogen adsorption specific surface area N₂SA of carbon black blended in the coating rubber exceeds 50 m²/g, heat generation of the coating rubber may increase, and rolling resistance and durability may deteriorate. If the blended amount of carbon black is less than 30 parts by mass per 100 parts by mass of the rubber component, reinforcing effect of the coating rubber is not sufficiently obtained, resulting in a limited effect of maintaining durability. If the blended amount of carbon black exceeds 80 parts by mass per 100 parts by mass of the rubber component, heat generation of the coating rubber may increase, and rolling resistance and durability may deteriorate.

In the rubber composition constituting the coating rubber, the type of rubber component rubber component serving as the main component of the rubber composition constituting the coating rubber is not particularly limited, for which diene rubber generally used in tires (coating rubber) such as, for example, natural rubber, styrene-butadiene rubber, or butadiene rubber can be used. The diene-based rubbers can be used alone or as any given blend.

The rubber composition constituting the coating rubber may have blended therein other types of fillers besides carbon black. Examples of other fillers can include silica, clay, mica, talc, calcium carbonate, aluminum hydroxide, aluminum oxide, and titanium oxide. The rubber composition constituting the coating rubber can have blended therein various types of additives commonly used in rubber compositions used for tires, such as vulcanization or crosslinking agents, vulcanization accelerators, various types of oil, anti-aging agents, and plasticizers, and such additives may be kneaded according to any common method to form a rubber composition, which can be used for vulcanization or crosslinking. Blended amounts of these additives may be any known amount, so long as the objects of the present invention are not hindered. The rubber composition constituting the coating rubber can be produced by mixing the above components using a general rubber kneading machine, such as a Banbury mixer, a kneader, and a roll.

The present invention will further be described below by way of examples, but the scope of the present invention is not limited to these examples.

### Examples

Pneumatic tires (test tires) of Conventional Example 1, Comparative Example 1, and Examples 1 to 10 were manufactured, each of which having a tire size of 245/40R18 and the basic structure illustrated in FIG. 1, with presence or absence of recycled PET resin, proportion of recycled PET resin in PET resin, tensile strength, melting points of the PET resin, number of twists, and types of coating rubber being listed in Tables 1 and 2 for the carcass cord.

The field "Melting Point" in Tables 1 and 2 indicates, as the melting point, the temperature of the melting peak of a DSC curve obtained by measuring a temperature range of 25°C to 300°C under a condition of a temperature rising rate of 10°C/min with regard to PET resin (petroleum-derived PET resin, mixture of petroleum-derived PET resin and recycled PET resin, recycled PET resin) constituting the carcass cord used in each tire, using a differential scanning calorimeter (DSC) manufactured by Shimadzu Corporation. The field "Type of Coating Rubber" in Tables 1 and 2 indicates which of the four types of coating rubbers (coating rubbers A to D) having the blending illustrated in Table 3 in terms of the number (A to D) thereof.

Conventional Example 1 uses only a petroleum-derived PET resin without using recycled PET resin. Although Examples 1 and 2 have a same proportion of recycled PET resin of "100%", a difference has occurred in melting points due to different proportions of impurities in the recycled PET resin used in each example, Examples 1 and 10 have different proportions of recycled PET resin and the same melting point. This is due to difference in the proportions of impurities in the recycled PET resin used in each example.

High-speed durability and rolling resistance for these test tires were evaluated according to the following evaluation method, and the results are shown in Tables 1 and 2.

### High-speed durability

Each test tire was assembled to a wheel having a rim size of 18 × 7.0 J, subjected to a test internal pressure of 220 kPa, and mounted on an indoor drum testing machine (drum diameter: 1707 mm). At an ambient temperature of 38±3°C and under a load of 88% of the maximum load specified by JATMA, the travel distance until tire failure while increasing the travel speed from 120 km/h by 10 km/h every 20 minutes. Evaluation results are expressed as index values with Conventional Example 1 being assigned the index value of 100. Larger index values indicate larger travel distance until failure occurs and superior high-speed durability.

### Rolling resistance

Each test tire was assembled to a wheel having a rim size of 18 × 7.0 J, subjected to an air pressure of 200 kPa and mounted on an indoor drum testing machine (drum diameter: 1707 mm), and the rolling resistance of the tire was measured while traveling at a speed of 80 km/h, in a state being pushed against the drum under a load equivalent to 85% of the maximum load at the air pressure described in JATMA, in compliance with JIS D4234. Evaluation results are expressed as index values with Conventional Example 1 being assigned the value of 100. The smaller the index value, the lower the rolling resistance.

**[Table 1]**

| | | Conventional Example 1 | Example 1 | Example 2 | Example 3 | Example 4 | Example 5 |
|---|---|---|---|---|---|---|---|
| Presence of recycled PET resin | | No | Yes | Yes | Yes | Yes | Yes |
| Proportion of recycled PET resin | % | 0 | 100 | 100 | 100 | 100 | 100 |
| Tensile strength | cN/dtex | 6.0 | 6.0 | 6.0 | 6.2 | 6.2 | 6.2 |
| Melting point | °C | 255 | 247 | 252 | 252 | 252 | 252 |
| Number of twists | Twists/100 mm | 38 | 38 | 38 | 38 | 38 | 38 |
| Type of coating rubber | | A | A | A | A | B | C |
| High-speed durability | Index value | 100 | 100 | 100 | 103 | 97 | 95 |
| Rolling resistance | Index value | 100 | 100 | 100 | 100 | 102 | 101 |

**[Table 2]**

| | | Example 6 | Example 7 | Example 8 | Example 9 | Example 10 | Comparative Example 1 |
|---|---|---|---|---|---|---|---|
| Presence of recycled PET resin | | Yes | Yes | Yes | Yes | Yes | Yes |
| Proportion of recycled PET resin | % | 100 | 100 | 100 | 100 | 50 | 100 |
| Tensile strength | cN/dtex | 6.2 | 5.8 | 6.2 | 6.2 | 6.0 | 6.0 |
| Melting point | °C | 252 | 252 | 252 | 252 | 247 | 235 |
| Number of twists | Twists/ 100 mm | 38 | 38 | 23 | 60 | 38 | 38 |
| Type of coating rubber | | D | A | A | A | A | A |
| High-speed durability | Index value | 98 | 97 | 98 | 98 | 100 | 91 |
| Rolling resistance | Index value | 102 | 101 | 100 | 100 | 100 | 101 |

**[Table 3]**

| | | Coating rubber | | | |
|---|---|---|---|---|---|
| | | A | B | C | D |
| NR | Parts by mass | 50 | 50 | 50 | 50 |
| SBR | Parts by mass | 33 | 33 | 33 | 33 |
| BR | Parts by mass | 17 | 17 | 17 | 17 |
| CB 1 | Parts by mass | 60 | | 20 | 85 |
| CB 2 | Parts by mass | | 60 | | |
| Aroma oil | Parts by mass | 7 | 7 | 7 | 7 |
| Zinc oxide | Parts by mass | 3 | 3 | 3 | 3 |
| Stearic acid | Parts by mass | 1.5 | 1.5 | 1.5 | 1.5 |
| Sulfur | Parts by mass | 3 | 3 | 3 | 3 |
| Vulcanization accelerator | Parts by mass | 1 | 1 | 1 | 1 |

Types of raw materials used as indicated in Table 3 are described below.
- NR: natural rubber, TSR20
- SBR: Styrene-butadiene rubber, SBR 1502, available from ZEON CORPORATION
- BR: Butadiene rubber, available from Nippon Zeon Co., Ltd., Nipol 1220
- CB1: Carbon black (GPF class), available from Tokai Carbon Co., Ltd. SEAST V (nitrogen adsorption specific surface area N₂SA: 35 m²/g)
- CB2: Carbon black (HAF class), available from Cabot Japan K.K., Show Black N330 (nitrogen adsorption specific surface area N₂SA: 80 m²/g)
- Aroma oil: Extract No. 4S, available from Showa Shell Sekiyu K.K.
- Zinc oxide: Zinc Oxide III, available from Seido Chemical Industry Co., Ltd.
- Stearic acid: Beads Stearic Acid NY, available from Nippon Oil & Fats Co., Ltd.
- Sulfur: MUCRON OT-20 (sulfur content: 80 mass%), available from Shikoku Chemicals Corporation
- Vulcanization accelerator: NS-G, available from Sanshin Chemical Industry Co., Ltd.

As can be seen from Tables 1 and 2, the tires of Examples 1 to 10 maintained high-speed durability and rolling resistance equivalent to those of Conventional Example 1 (when a carcass cord not containing recycled PET resin was used). In Comparative Example 1, on the other hand, the melting point of PET resin containing recycled PET resin was low, and therefore high-speed durability deteriorated.

### Reference Signs List

1 Tread portion
2 Sidewall portion
3 Bead portion
4 Carcass layer
5 Bead core
6 Bead filler
7 Belt layer
8 Belt cover layer
CL Tire equator

## Claims

1. A pneumatic tire, comprising:
a tread portion extending in a tire circumferential direction and having an annular shape;
a pair of sidewall portions disposed on both sides of the tread portion;
a pair of bead portions each disposed on an inner side of the sidewall portions in a tire radial direction; and
at least one carcass layer mounted between the pair of bead portions;
a carcass cord constituting the carcass layer being an organic fiber cord made of PET resin having a melting point of 240°C to 260°C, and
the PET resin containing recycled PET resin.

2. The pneumatic tire according claim 1, wherein the coating rubber covering the carcass cord is formed of a rubber composition including 30 to 80 parts by mass of carbon black having a nitrogen adsorption specific surface area N₂SA of 25 m²/g to 50 m²/g per 100 parts by mass of rubber component.

3. The pneumatic tire according to claim 1 or 2, wherein the carcass cord containing recycled PET resin has a tensile strength of 6.0 cN/dtex or more.

4. The pneumatic tire according to any one of claims 1 to 3, wherein the number of twists of the carcass cord ranges from 25 twists/100 mm to 50 twists/100 mm.

5. The pneumatic tire according to any one of claims 1 to 4, wherein a proportion of the recycled PET resin in the PET resin ranges from 20% to 100%.
